# EUROPEAN PATENT SPECIFICATION

(11) **EP 3 800 390 B1**
(45) Date of publication and mention of the grant of the patent: **28.06.2023**
(21) Application number: 20198523.1
(22) Date of filing: 25.09.2020
(51) Int. Cl.: F16L 27/12, F28F 9/02, F16L 37/00, F16L 41/18

(54) **HYDRAULIC JOINT**
HYDRAULISCHE VERBINDUNG
JOINT HYDRAULIQUE

(30) Priority: 02.10.2019 IT 201900017774
(43) Date of publication of application: 07.04.2021
(73) Proprietor: T.erre S.r.l. a Socio Unico, 40012 Calderara di Reno (Bologna) (IT)
(72) Inventor: POLIDORI, Gianfranco, 20090 CUSAGO (MILANO) (IT); CREMONINI, Maurizio, 41015 NONANTOLA (MODENA) (IT)
(74) Representative: Puggioli, Tommaso

(56) References cited:
- EP-A1- 2 896 863
- WO-A2-2014/199359
- DE-A1-102015 204 982
- GB-A- 2 242 247

## Description

This invention relates to a hydraulic joint for a cooling circuit of a motor unit which allows the obtaining of an assembly condition of the cooling circuit in the unit to be speeded up, faced with possible variations in the positioning of the components connected hydraulically by means of the cooling circuit. A motor unit, in the automotive sector, may also comprise, in addition to the motor, a radiator, a heat exchanger and a hydraulic cooling circuit. The hydraulic cooling circuit comprises at least one body made in a single piece. The body made in a single piece operatively defines a hydraulic path for the circulation of a cooling fluid between the motor, the radiator and the heat exchanger. The cooling circuit must be mounted in such a way that the body operatively places the motor, the radiator and the heat exchanger in hydraulic communication with each other. For this purpose, the body in turn comprises at least a first pipe, which operatively must put in hydraulic communication the motor with the radiator, and a second pipe, which operatively must put in communication the first pipe with the exchanger.

The operation by the operator for mounting the cooling circuit may be excessively lengthy and/or difficult due to possible machining tolerances which affect the positioning of the motor and the heat exchanger, forcing the operator to position the single body in the correct position.

Prior art hydraulic joint solutions are known from patent documents WO 2014/199359 and GB 2 242 247 in which a first and a second conduit are connected by a bushing and hydraulic sealing elements.

However, these solutions a the drawback due to the fact that they comprise fixing means acting between the bushing and the two conduits configured for locking the two conduits and the bushing without then being able to have the possibility of relative axial adjustment movements between the two conduits or also rotational movements about the axis of one of the two conduits.

An assembly method according to this invention and/or according to any one of the accompanying method claims makes it possible to mount a cooling circuit in a motor unit more quickly than in the prior art, faced with possible machining tolerances in the positioning of the components connected hydraulically by means of the cooling circuit.

A hydraulic cooling circuit according to the invention and/or according to any one of the appended circuit claims comprises a hydraulic joint according to the invention and/or according to any of the appended joint claims. The cooling circuit according to the invention and/or according to any one of the accompanying circuit claims also comprises a first pipe and a second pipe.

A circuit according to the invention and/or according to any one of the accompanying circuit claims is configured to be assembled by means of an assembly method according to this description and/or according to any one of the accompanying method claims.

A motor unit according to the invention and/or according to any one of the appended motor unit claims comprises a cooling circuit according to the invention and/or according to any one of the appended circuit claims. The motor unit according to the invention and/or according to any of the accompanying motor unit claims also comprises a motor, a heat exchanger and a radiator.

The features of a method, a joint, a circuit and a motor unit according to the invention will become clearer from the detailed description below of respective example embodiments of the method, joint, circuit and motor unit according to the invention.

The following detailed description refers to the accompanying drawings, in which:
- Figure 1 illustrates a possible example embodiment of a part of a cooling circuit according to the invention, whilst a first pipe and a second pipe of the embodiment of the circuit adopt a hydraulic coupling condition, said hydraulic coupling condition being obtained by means of a possible example embodiment of a hydraulic joint according to the invention;
- Figure 2 is a detailed view of a part of Figure 1 and in which the second pipe and a locking body are not shown for greater clarity of illustration of some other features of the joint;
- Figure 3 shows the embodiment of the joint in a longitudinal cross-section both relative to the second pipe and relative to the first pipe;
- Figure 4 shows the embodiment of the joint seen from above by means of a transversal cross-section of the second pipe;
- Figure 5 is a perspective view of a locking body belonging to the embodiment of the joint;
- Figure 6 shows the locking body of Figure 5 cut in a plane passing through the axis of the locking body.

The accompanying drawings refer to a possible example embodiment of a hydraulic joint according to the description. For simplicity, the term "joint" will be used below to mean the possible embodiment of the joint.

The joint is denoted in its entirety by the numeral 1.

The accompanying drawings refer to a possible example embodiment of a cooling circuit according to the description. For simplicity, the term "circuit" will be used below to mean the possible embodiment of the circuit.

The circuit comprises the joint 1, a first pipe 2 and a second pipe 3.

The accompanying drawings refer to a possible example embodiment of a motor unit according to the description. For simplicity, the term "unit" will be used below to mean the possible embodiment of the motor unit.

The unit comprises the circuit. The circuit is configured to adopt a condition of assembly in the unit.

In the assembly condition of the circuit, the first pipe 1 and the second pipe 2 adopt a hydraulic coupling condition relative to each other. The hydraulic coupling condition is defined by the joint 1. For this reason, the assembly condition corresponds at least to the hydraulic coupling condition between the first pipe 2 and the second pipe 3.

The unit also comprises a motor, a heat exchanger and a radiator. The unit can be used, for example, in the context of a vehicle, and therefore in the automotive sector.

In this circuit assembly condition, the first pipe 2 is hydraulically interposed between the motor and the radiator, in such a way as to put the motor in hydraulic communication with at least the radiator. In this assembly condition of the circuit, the second pipe 3 is hydraulically interposed between the first pipe 2 and the heat exchanger, in such a way as to put in hydraulic communication the first pipe 2 at least with the heat exchanger. In this assembly condition, the first pipe 2 and the second pipe 3 adopt the mutual hydraulic coupling condition, which is defined by the joint. For this reason, in this assembly condition, the second pipe 3 places in communication, through the joint, the first pipe 2 with at least the heat exchanger.

The assembly condition therefore corresponds at least to a condition of hydraulic connection between the first pipe 2 and the motor and to a condition of hydraulic connection between the second pipe 3 and the heat exchanger.

As illustrated, the hydraulic joint 1 comprises a guide pipe 4 configured to adopt a position for fixing to the first pipe 2.

The coupling condition corresponds to the fixing position of the guide pipe 4 and to a position for inserting an end portion 31 of the second pipe 3 in the guide pipe 4.

The hydraulic joint 1 also comprises a sealing unit 5 interposed between the end portion 31 and the guide pipe 4, in the inserted position of the end portion 31.

The hydraulic joint 1 also comprises a body 6 for locking the second pipe 3 to the first pipe 2.

As illustrated, the guide pipe 4 is configured to allow adjustment, in the coupling condition, of a positioning or axial movement and an orientation or angular movement of the second pipe 3, by a translational movement of the second pipe 3 along its axis 32 and relative to the first pipe 2, and by a rotary movement of the second pipe 3 about its axis 32 and relative to the first pipe 2.

Again as illustrated, the locking body 6 is positioned between the second pipe 3 and the guide pipe 4, by means of a locking movement, in an operating position in which the locking body 6 prevents the disengagement of the end portion 31 from the guide pipe 4.

The locking body 6 is configured to allow the end portion 31 the positioning or axial movement and an orientation or angular movement of the second pipe 3 in the locked operating position.

In other words, the hydraulic joint is structured to allow the second pipe already positioned and connected in a sealed fashion to the first pipe, to be able to move away from and towards the first pipe and to rotate about the relative axis so as to be able to correctly position itself for the connection, for example with a heat exchanger (or radiator) as described in more detail below.

The accompanying drawings refer to a possible example embodiment of an assembly method according to the description. The term "method" used below relates to the possible embodiment of the assembly method.

The circuit is configured to be mounted in the unit by means of the method.

The method comprises a step of obtaining the condition of hydraulic connection between the first pipe 2 and the motor. The method comprises a step of obtaining the condition of hydraulic connection between the second pipe 3 and the heat exchanger. The method comprises a step of obtaining the condition of hydraulic coupling between the first pipe 2 and the second pipe 3.

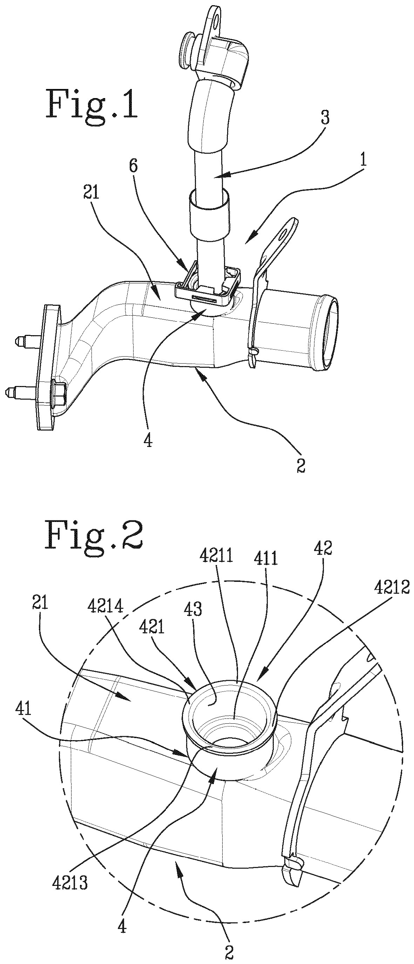

In Figures 1 to 4, the first pipe 2 and the second pipe 3 are shown whilst they adopt the hydraulic coupling condition between each other, even though in Figure 2 the second pipe is not visible.

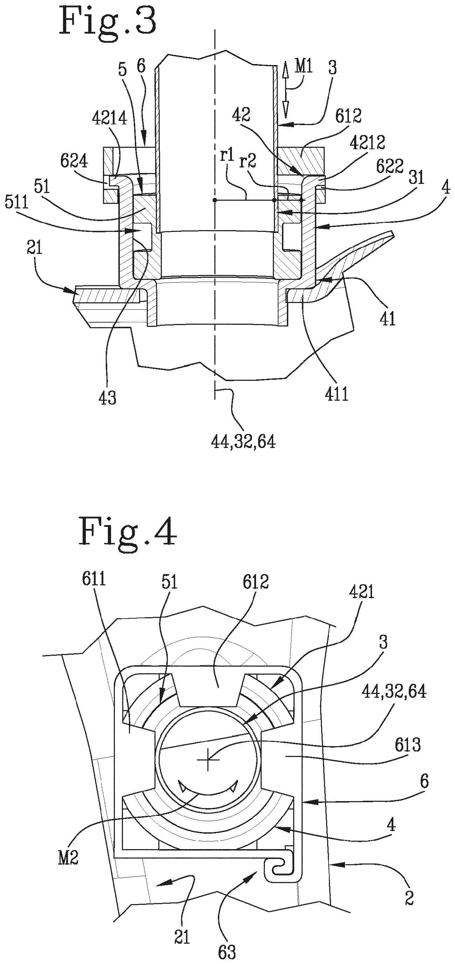

The joint is configured to allow a user to perform, in said coupling condition, an adjustment of an axial positioning and an angular orientation of said second pipe 3. The term "axial positioning" means a component of positioning the second pipe 3 relative to the first pipe 2 which may vary by means of a translational motion component of the second pipe 3 relative to the first pipe 2. The translational motion component is considered parallel to the axis of the second pipe 3. The term "angular orientation" of the second pipe 3 means a component of positioning the second pipe 3 relative to the first pipe 2 which can be varied by means of a rotary motion component of the second pipe 3 relative to the first pipe 2. The rotational motion component is considered about the axis of the second pipe 3. The axis of the second pipe 3 is labelled 32 in Figure 3.

The joint 1 is configured to allow the user to perform the adjustment by means of a translational movement of sad second pipe 3, and/or by means of a rotary movement of said second pipe 3. The translational movement corresponds at least to the translational motion component. The rotary movement corresponds at least to the component of rotational motion.

This translational movement is to be considered relative to the first pipe 2 and along the axis 32 of the second pipe 3. This rotational movement is to be considered relative to the first pipe 2 and about the axis 32 of the second pipe 3.

The direction of this translational movement is represented by the double arrow M1 of Figure 3. The direction of the rotational movement is represented by the double arrow M2 of Figure 4.

The method comprises a step of adjusting the axial positioning and the angular orientation of the second pipe 3, by means of the translational movement and the rotary movement, respectively, whilst the first pipe 2 and the second pipe 3 adopt the coupling condition.

By means of this adjustment, the user is facilitated with regard to the step of obtaining the hydraulic connection between the first pipe 2 and the motor and/or the step of obtaining the hydraulic connection between the second pipe 3 and the heat exchanger, since the joint 1 can be adapted, on the side of the heat exchanger, to any machining tolerances of one or more components of the heat exchanger, and/or, on the side of the motor, to any tolerances of one or more components of the motor.

A hydraulic joint is therefore provided for a cooling circuit of a motor unit which allows the obtaining of the assembly condition of the cooling circuit in the unit to be speeded up.

Moreover, the joint 1 makes it possible to make the first pipe 2 and the second pipe 3 with respective different materials, each selected on the basis of the specific needs relative to the components which each of the first pipe 2 and second pipe 3 puts in hydraulic communication. For example, the first pipe 2 could be made of iron and the second pipe 3 made of stainless steel.

In this way the process for producing the cooling circuit is simplified, since a material could be used for the first pipe 2 which allows a greater production simplicity.

A hydraulic joint is therefore provided for a cooling circuit of a motor unit which allows the costs of the process for producing the cooling circuit to be simplified and/or reduced.

The joint comprises a guide pipe 4. The guide pipe 4 is configured to adopt a position for fixing to said first pipe 2.

The guide pipe 4 is therefore associated with the pipe 2.

In Figures 1 to 4 the guide pipe 4 adopts the condition for fixing to the first pipe 2.

The hydraulic coupling condition between the first pipe 2 and the second pipe 3 is obtained by means of the position for fixing the guide pipe 4 to the first pipe 2 and by means of a position for inserting an end portion 31 of the second pipe 3 in the guide pipe 4. For this reason, in this hydraulic coupling condition between the first pipe 2 and the second pipe 3, the guide pipe 4 is fixed to the first pipe 2 and the end portion 31 of the second pipe 3 is inserted in the guide pipe 4.

The step of obtaining the hydraulic coupling condition between the first pipe 2 and the second pipe 3 therefore comprises a step of inserting the end portion 31 of the second pipe 3 in the guide pipe 4. The step of obtaining the hydraulic coupling condition between the first pipe 2 and the second pipe 3 therefore comprises a step of fixing the guide pipe 4 in the fixing position to the first pipe 2.

In this invention, the term "pipe" may be used to mean a complete pipe or a part of a pipe or a section of a pipe or a sector of a pipe.

The guide pipe 4 is configured for guiding the translational movement of the second pipe 3.

The guide pipe 4 is configured for guiding the rotational movement of the second pipe 3. In this way, the guide pipe 4 accompanies and/or guides the adjustment which the user can perform to adapt the coupling condition to the above-mentioned tolerances.

The method comprises guiding said movements by means of said guide pipe 4.

The joint comprises a sealing unit 5. The sealing unit 5 is configured to create friction, in this coupling condition, between said end portion 31 of the second pipe 3 and the guide pipe 4. In this way, the sealing unit 5, in this inserted position of the end portion 31, partly contrasts the said translational and rotational movements, in particular by making friction and/or seal between the end portion 31 and the inner lateral surface 43 of the guide pipe 4. The inner lateral surface 43 is indicated in Figures 2 and 3.

The method comprises opposing said movements by friction between the sealing unit 5 and the guide pipe 4.

The joint 1 comprises a locking body 6. The joint 1 is configured to allow the user to lock the body 6, by means of a locking movement, in an operating position. In Figures 1, 3 and 4 the body 6 adopts the operating position. This operating position is to be considered a position relative at least to the second pipe 3 and to the guide pipe 4.

The joint 1 is configured so that the body 6, when it adopts the operating position, prevents the disengagement of the end portion 31 of the second pipe 3 relative to the guide pipe 4, but nevertheless allows a limited stroke of the translational adjustment movement of the second pipe 3.

The method comprises a step of locking the body 6 in the operating position.

The guide pipe 4 comprises a first end portion 41 and a second end portion 42 which is opposite the first end portion 41.

In general, when the body 6 adopts the operating position, the body 6 prevents the disengagement of the end portion 31 of the second pipe 3 relative to the guide pipe 4 at least on the side of an end portion of the guide pipe 4. The end portion of the guide pipe 4 could be, for example, the second end portion 42.

The joint 1 is configured so that, when the guide pipe 4 adopts the fixing position, the first end 41 is proximal to said first pipe 2, in such a way as to be in communication with said first pipe 2. The joint 1 is configured so that, when the guide pipe 4 adopts the fixing position, the second end portion 42 is distal relative to said first pipe 2. The first end portion 41 and the second end portion 42 are shown in Figures 2 and 3.

When the body 6 adopts the operating position, the body 6 is mechanically constrained between the guide pipe 4 and the second pipe 3, but, as mentioned, allows an axial movement of the end 31 of the second pipe 3 in use.

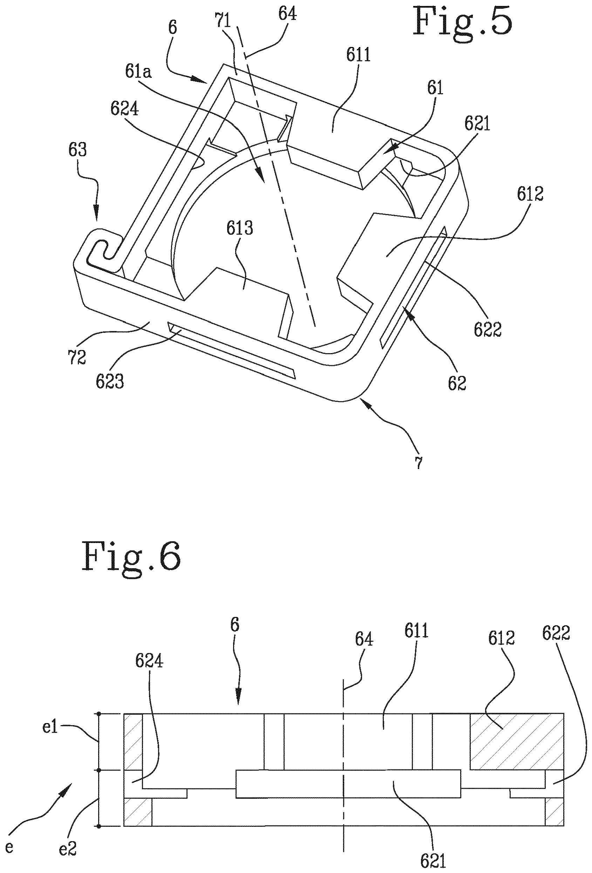

The locking body 6 comprises a covering structure 61. The covering structure 61 is indicated in Figure 5.

The covering structure 61 defines an opening 61a. The opening 61a passes through the body 6.

When the end portion 31 of the second pipe 3 adopts the inserted position, the end portion 31 of the second pipe 3 occupies a first radial sector r1 of said guide pipe 4. When the end portion 31 of the second pipe 3 adopts the inserted position, the sealing unit 5 occupies a second radial sector r2 of the guide pipe 4. The first radial sector r1 and second radial sector r2 are indicated in Figure 3. These radial sectors r1 and r2 are separate from each other and positioned one after the other along the radial extension of the guide pipe 4.

When the body 6 adopts the operating position, the second pipe 3 passes through the opening 61a.

When the body 6 adopts the operating position, the structure 61 covers at least partly the second radial sector r2 in such a way as to prevent, in conjunction with said sealing unit 5, the disengagement. The structure 61 prevents the disengagement of the end portion 31 of the second pipe 3 relative to the guide pipe 4 from the second end portion 42 of the guide pipe 4.

The method comprises a step of transporting the second pipe 2, the body 6, and the guide pipe 4. During the transporting step, the body 6 adopts the operating position and the end portion 31 of the second pipe 3 is inserted in said guide pipe 4.

The covering structure 61 of the body 6, during any transport step, therefore prevents the removal of the end portion 31 of the second pipe 3 relative to the guide pipe 4 from the second end 42 of the guide pipe 4.

In that way, if the second pipe 3 must be transported, the step of transporting the assembly comprising the second pipe 3 and the guide pipe 4 is facilitated, using the locking body 6 in the operating position. A hydraulic joint is therefore provided for a cooling circuit of a motor unit which allows the obtaining of the assembly condition of the cooling circuit in the unit to be speeded up, also facilitating a possible step of transporting the second pipe 3 and the guide pipe 4.

The second end portion 42 of the guide pipe 4 has a collar 421. The collar 421 protrudes radially away from the axis 44 of the guide pipe 4. The axis 44 of the guide pipe 4 is indicated in Figure 3.

In the inserted position of the end portion 31 of the second pipe 3 in the guide pipe 4, at least the end portion 31 of the second pipe 3 is coaxial relative to said guide pipe 4. In the inserted position of the end portion 31 of the second pipe 3 in the guide pipe 4, the axis of the second pipe 3, at least along the end portion 31, could therefore coincide with the axis 44 of the guide pipe 4, as shown in Figures 3 and 4.

The body 6 defines snap-on locking means 63. The body 6 can be locked in a snap-on fashion in the operating position using said locking means 63. The body 6 practically forms an elastic gripper 7 comprising two arms 71 and 72, which can be mutually locked using the locking means 63 which are formed by the arms 71 and 72. The arms 71 and 72 are indicated in Figure 5.

When the body 6 adopts the operating position, the body 6 is engaged with the collar 421 in such a way as to be constrained at least axially relative to said guide pipe 4. In that way, the body 6 can be easily locked in the operating position by means of a rotation of the two arms of the gripper 7 on a plane at right angles to the axis of the second pipe 3.

The sealing unit 5 comprises a bushing 51. The bushing 51, in the inserted position of the end portion 31 of the second pipe 3 in the guide pipe 4, is positioned around the end portion 31 of the second pipe 3. The sealing unit 5 comprises a sealing element not illustrated. The sealing element is positioned in a seat 511 defined by the bushing 51. The seat could be annular. This opens radially towards the outside of the second pipe 3. The sealing element could be, for example, a gasket. The gasket could be annular.

The first end portion 41 of the guide pipe 4 defines a barrier 411. In the coupling condition between the first pipe 2 and the second pipe 3, the barrier 411 covers at least partly the second radial sector r2 of the guide pipe 4 in such a way as to prevent, in conjunction with said sealing unit 5, the second pipe 3 protruding from said guide pipe 4 from the first end portion 41 of the guide pipe 4. The barrier 411, during any transport step, therefore prevents the removal of the end portion 31 of the second pipe 3 relative to the guide pipe 4, from the first end 41 of the guide pipe 4.

A hydraulic joint is therefore provided for a cooling circuit of a motor unit which allows the possible step of transporting the second pipe 3 and the guide pipe 4 to be further facilitated, since the assembly comprising the second pipe 3, guide pipe 4 and body 6 can also be transported by gripping the guide pipe 4.

In the assembly condition of the cooling circuit in the unit, the guide pipe 4 is in communication with the first pipe 2 through a side wall 21 of the first pipe 2, in such a way that said second pipe 3 defines a side hydraulic branch which branches from said first pipe 2 starting from said side wall 21. The side wall 21 of the first pipe 2 is indicated in Figures 1 to 4.

The body 6 comprises a weakness 62. The weakness comprises a plurality of slits 621, 622, 623, and 624.

The collar 421 of the guide pipe 4 may be considered as comprising a plurality of angular sectors 4211, 4212, 4213, and 4214. The angular sectors of the collar 421 are indicated in Figure 2. Figure 3 shows in cross-section the sector labelled 4212.

When the body 6 adopts the operating position, each of said slits of the body 6 is engaged with a respective angular sector of the collar 421, by inserting the respective sector in the respective slit.

The body 6 can be considered an elastic gripper 7 which can be elastically locked in a snap-on fashion in the operating position, and comprising two arms 71 and 72 which in the position are locked to each other and engaged with the collar 421. The user opens the gripper 7 by moving the arms 71 and 72 away from each other in opposition to the elasticity of the gripper 7, and when the gripper 7 is in the correct position around the collar 421, the user releases the gripper 7 in such a way that the elasticity of the gripper 7 returns the arms 71 and 72 towards each other, so as to close the gripper using the locking means 63. The closing movement of the gripper 7 causes the insertion of a respective angular sector of the collar 421 in each slit of the gripper 7.

Starting from the assumption that the body 6 or the gripper 7 can be considered as a system for locking the second pipe 3 relative to the guide pipe 4, at least in the possible step for transporting the assembly comprising the second pipe 3 and guide pipe 4, a hydraulic joint is provided for a cooling circuit of a motor unit which makes it possible to further facilitate any transport step of the second pipe 3 and of the guide pipe 4, facilitating the assembly of the locking system of the second pipe 3 relative to the guide pipe 4.

The body 6 has an angular extension about its axis 64. The body 6 has an axial extension along said axis 64 of the body 6. The angular extension of the body 6 could be an annular extension, in such a way that the gripper 7 corresponding to the body 6 can be considered an annular gripper at least in the closed condition of the gripper 7.

The axis 64 of the body 6 is indicated in Figures 3, 4, 5 and 6. The cross-section of Figure 6 is a cross-section of the body 6 on a plane containing the axis 64 of the body 6.

The slits 621, 622, 623, 624 are angularly distributed around the axis 64 of the body 6, so as to facilitate the locking of the body 6 in the operating position. The structure 61 comprises a plurality of protrusions 611, 612 and 613. The protrusions are visible in perspective in Figure 5 and from above in Figure 4. Each of the protrusions is positioned radially relative to said axis 64 of the body 6 and protrudes in the opening 61a through which the second pipe 3 passes.

When the body 6 adopts the operating position, the protrusions are abutted against the second pipe 3 from the outside relative to said second pipe 3, in such a way as to contribute to guiding said rotary movement of the second pipe 3.

The axial extension of the body 6 is labelled "e" in Figure 6.

The protrusions 611, 612, and 613 are situated in a first sector e1 of the axial extension "e" of the body 6. The slits 621, 622, 623, and 624 are situated in a second sector e2 of said axial extension "e". These axial sectors e1 and e2 are separate from each other and positioned one after the other along said axial extension "e" of the body 6. In that way, when the body 6 adopts the operating condition, the protrusions 611, 612, 613 are abutted on the second pipe 3 outside the guide pipe 4, at a different height, relative to the slits, along the axis 64 of the body 6, in such a way as to stabilise the positioning of the body 6 in the operating position.

The projections are angularly distributed around the axis 64 of the body 6. When the body 6 adopts the operating position, the body 6 is also coaxial relative to the guide pipe 3. For this reason, when the body adopts the operating position, the axis 64 of the body 6, the axis 32 of the second pipe 3, and the axis 44 of the guide pipe 4 coincide with each other.

A system is therefore provided for locking the second pipe 3 relative to the guide pipe 4, the term "locking" meaning preventing the escape of the end portion 31 of the second pipe 3 relative to the guide pipe 4, which can be used in a joint of a cooling circuit and which also allows the positioning and the angular orientation on itself of the second pipe 3 relative to the first pipe 2 to be easily adjusted, in such a way as to adapt the coupling condition between the first pipe 2 and the second pipe 3 to the machining tolerances and/or in any case to the actual positioning of the components which must be connected hydraulically by means of the circuit, facilitating in this way the obtaining of the assembly condition of the circuit of the motor unit.

## Claims

1. A hydraulic joint (1) for a cooling circuit of a motor unit, said joint (1) being configured to define a hydraulic coupling condition between a first pipe (2) and a second pipe (3), and comprising:
a guide pipe (4) configured to adopt a position for fixing said the first pipe (2), said coupling condition corresponding to said position for fixing the guide pipe (4) and to a position for inserting an end portion (31) of said second pipe (3) in said guide pipe (4); the guide pipe (4) comprising a first end portion (41) and a second end portion (42) which is opposite the first end portion (41); the second end portion (42) of the guide pipe (4) having a collar (421);- a sealing unit (5) interposed between said end portion (31) and said guide pipe (4), in said inserted position of the end portion (31);
- a body (6) for locking the second pipe (3) to the first pipe (2);
wherein the guide pipe (4) is configured to allow adjustment, in the coupling condition, of a positioning or axial movement and an orientation or angular movement of the second pipe (3), by means of a translational movement of said second pipe (3) along its axis (32) and relative to said first pipe (2), and by means of a rotary movement of said second pipe (3) about its axis (32) and relative to said first pipe (2), respectively; and wherein
the locking body (6) is positioned between the second pipe (3) and the guide pipe (4), by means of a locking movement, in an operating position in which the locking body (6) prevents the disengagement of the end portion (31) from said guide pipe (4); said locking body (6) being configured to allow the end portion (31) of the second pipe (3) the possibility of positioning or axial movement and an orientation or angular movement of the second pipe (3) in said locking operating position,
**characterised in that**
said locking body (6) defines snap-on locking means (63) and can be locked in a snap-on fashion in said operating position using said locking means (63); when the locking body (6) adopts the operating position, the locking body (6) is engaged with the collar (421) in such a way as to be constrained at least axially relative to said guide pipe (4); the locking body (6) forming an elastic gripper (7) comprising two arms (71 and 72), which can be mutually locked using the locking means (63) which are formed by the arms (71) and (72) **in that** way, the locking body (6) can be easily locked in the operating position by means of a rotation of the two arms of the gripper (7) on a plane at right angles to the axis of the second pipe (3).

2. The joint according to claim 1, wherein said joint (1) is configured so that, in said operating position, said body (6) is mechanically constrained between said guide pipe (4) and said second pipe (3).

3. The joint (1) according to claim 2, wherein said locking body (6) comprises a covering structure (61) which defines an opening (61a) passing through said body (6), said joint (1) being configured so that:
- in said inserted position, said end portion (31) occupies a first radial sector (r1) of said guide pipe (4) and said sealing unit (5) occupies a second radial sector (r2) of said guide pipe (4);
- in said operating position, said second pipe (3) passes through said opening (61a);
- in said operating position, said structure (61) at least partly covers said second radial sector (r2) in such a way as to prevent, in conjunction with said sealing unit (5), said disconnection.

4. The joint according to claim 3, wherein:
- said guide pipe (4) comprises the first end portion (41) which, in said fixing position, is proximal relative to said first pipe (2) in such a way as to be in communication with said first pipe (2), and the second end portion (42), which is opposite said first end portion (41) and which, in said fixing position, is distal relative to said first pipe (2), said second end portion (42) of the guide pipe (4) having the collar (421);
- said joint (1) is configured so that, in said operating position, said body (6) is engaged with said collar (421) in such a way as to be constrained at least axially relative to said guide pipe (4);
- said joint (1) is configured so that, in said operating position, said structure (61) at least partly covers said second radial sector (r2) in such a way as to prevent, in conjunction with said sealing unit (5), said disconnection from said second end portion (42) of the guide pipe (4).

5. The joint (1) according to claim 4, wherein said collar (421) protrudes radially away from the axis (44) of the guide pipe (4).

6. The joint (1) according to claim 4 or 5, wherein:
- said body (6) comprises a weakness (62) which comprises a plurality of slits (621, 622, 623, 624);
- said joint (1) is configured so that, in said operating position, each of said slits (621, 622, 623, 624) is engaged with a respective angular sector (4211; 4212; 4213, 4214) of said collar (421) by inserting said respective sector (4211; 4212; 4213; 4214) in the respective slit (621; 622; 623; 624).

7. The joint according to claim 6, wherein:
- said body (6) has an angular extension about a relative axis (64) and an axial extension along said axis (64) of the body (6);
- said slits (621, 622, 623, 624) are angularly distributed around the axis (64) of the body (6).

8. The joint (1) according to claim 7, wherein:
- said structure (61) comprises a plurality of protrusions (611, 612, 613) positioned radially relative to said axis (64) of the body (6) and protruding in said opening (61a);
- said joint (1) is configured so that, in said operating position, said protrusions (611, 612, 613) abut against said second pipe (3) from the outside relative to said second pipe (3), in such a way as to contribute to guiding said rotary movement of the second pipe (3).

9. The joint (1) according to claim 8, wherein said protrusions (611, 612, 613) are situated in a first sector (e1) of the axial extension (e) of the body (6) and said slits (621, 622, 623, 624) are situated in a second sector (e2) of said axial extension (e), said axial sectors (e1, e2) being separate from each other and positioned one after the other along said axial extension (e), in such a way that, in the operating condition, said protrusions (611, 612, 613) are abutted on the second pipe (3) outside the guide pipe (4).

10. The joint (1) according to any one of claims 4 to 9, wherein:
- said sealing unit (5) comprises a bushing (51) configured to be positioned around said end portion (31) of the second pipe (3) and a sealing element positioned in a seat (511) defined by the bushing (511);
- said first end portion (41) of the guide pipe (4) defines a barrier (411), said joint (1) being configured so that said barrier (411) at least partly covers said second radial sector (r2) in such a way as to prevent, in conjunction with said sealing unit (5), said end portion (31) of the second pipe (3) protruding from said guide pipe (4) from said first end portion (41) of the guide pipe (4).

11. The joint (1) according to any one of the preceding claims, wherein:
- said joint (1) is configured so that, in said inserted position, at least said end portion (31) of said second pipe (3) is coaxial relative to said guide pipe (4);
- said joint (1) is configured so that, in said operating position, said body (6) is coaxial with said second pipe (3).

12. A cooling circuit for a motor unit comprising:
- a first pipe (2), said circuit being configured to adopt a condition of assembly in the motor unit in which said first pipe (2) is hydraulically interposed between a motor of the unit and a radiator;
- a second pipe (3), said circuit being configured so that, in said assembly condition, said second pipe (3) is hydraulically interposed between said first pipe (3) and a heat exchanger;
- a joint (1) according to any one of the preceding claims, said circuit being configured so that, in said assembly condition, the joint (1) defines the hydraulic coupling condition between the first pipe (2) and the second pipe (3).

13. The cooling circuit according to claim 12, wherein the circuit is configured so that, in said assembly condition, the guide pipe (4) is in communication with the first pipe (2) through a side wall (21) of the first pipe (2), in such a way that said second pipe (3) defines a side hydraulic branch which branches from said first pipe (2) starting from said side wall (21).

14. A motor unit comprising a cooling circuit according to claim 12 or 13 and said radiator, motor and heat exchanger.

15. A method for assembling a cooling circuit according to claim 12 or 13 in a motor unit, said cooling circuit comprising a first pipe (2) and a second pipe (3) which, in the assembly condition of the cooling circuit in the unit, adopt a hydraulic coupling condition relative to each other; wherein the method comprises:
- a step of inserting an end portion (31) of said second pipe (3) in a guide pipe (4);
- a step of locking a body (6) in an operating position in which it prevents the disengagement of said end portion (31) relative to said guide pipe (4) at least on the side of an end portion of the guide pipe (4);
- a step of transporting the second pipe (2), the body (6), and the guide pipe (4), during which the body (6) adopts the operating position and the end portion (31) of the second pipe (3) is inserted in said guide pipe (4);
- a step of obtaining a condition of hydraulic connection between said first pipe (2) and a motor of said motor unit;
- a step of fixing said guide pipe (4) to said first pipe (2), in such a way as to obtain a hydraulic coupling condition between said first pipe (2) and second pipe (3);
- a step of adjusting an axial positioning and an angular orientation of said second pipe (3), whilst said first pipe (2) and second pipe (3) adopt said hydraulic coupling condition, by means of a translational movement of said second pipe (3) along its axis and relative to said first pipe (2), and a rotary movement of said second pipe (3) about its axis (32) and relative to said first pipe (2), respectively;
- a step of obtaining a condition of hydraulic connection between said second pipe (3) and a heat exchanger;
wherein said adjusting step comprises:
- guiding said movements by means of said guide pipe (4);
- opposing said movements by friction between a sealing unit (5) and said guide pipe (4), said sealing unit (5) being situated around said end portion (31).

## Patentansprüche

1. Hydraulische Verbindung (1) für einen Kühlkreislauf einer Motoreinheit, wobei die Verbindung (1) ausgelegt ist, um einen hydraulischen Kupplungszustand zwischen einem ersten Rohr (2) und einem zweiten Rohr (3) zu definieren, und umfassend:
ein Führungsrohr (4), das ausgelegt ist, um eine Position zum Fixieren des ersten Rohrs (2) einzunehmen, wobei der Kupplungszustand dieser Position zum Fixieren des Führungsrohrs (4) und einer Position zum Einfügen eines Endabschnitts (31) des zweiten Rohrs (3) in das Führungsrohr (4) entspricht, wobei das Führungsrohr (4) einen ersten Endabschnitt (41) und einen zweiten Endabschnitt (42), der gegenständig zum ersten Endabschnitt (41) angeordnet ist, umfasst, wobei der zweite Endabschnitt (42) des Führungsrohrs (4) eine Schelle (421) aufweist; - eine Dichtungseinheit (5), die zwischen dem Endabschnitt (31) und dem Führungsrohr (4) in der eingefügten Position des Endabschnitts (31) eingesetzt ist; - einen Körper (6) zum Festspannen des zweiten Rohrs (3) am ersten Rohr (2),
wobei das Führungsrohr (4) ausgelegt ist, um im Kupplungszustand das Justieren einer Positionierungs- oder axialen Bewegung und einer Ausrichtungs- oder Winkelbewegung des zweiten Rohrs (3) jeweils mittels einer translatorischen Bewegung des zweiten Rohrs (3) entlang seiner Achse (32) und relativ zum ersten Rohr (2) bzw. mittels einer rotatorischen Bewegung des zweiten Rohrs (3) um seine Achse (32) und relativ zum ersten Rohr (2) zu erlauben, wobei der Festspannkörper (6) zwischen dem zweiten Rohr (3) und dem Führungsrohr (4) mittels einer Festspannbewegung in einer Betriebsposition positioniert ist, in der der Festspannkörper (6) das Lösen des Endabschnitts (31) aus dem Führungsrohr (4) verhindert, wobei der Festspannkörper (6) ausgelegt ist, um dem Endabschnitt (31) des zweiten Rohrs (3) die Möglichkeit einer Positionierungs- oder axialen Bewegung und einer Ausrichtungs- oder Winkelbewegung des zweiten Rohrs (3) in die Feststellbetriebsposition zu erlauben,
**dadurch gekennzeichnet, dass** der Festspannkörper (6) Schnappfestspannmittel (63) definiert und auf eine Schnappweise in der Betriebsposition unter Nutzung der Festspannmittel (63) festgespannt werden kann, wobei der Festspannkörper (6) mit der Schelle in Eingriff (421) gelangt, wenn der Festspannkörper (6) die Betriebsposition einnimmt, sodass er mindestens axial relativ zum Führungsrohr (4) befestigt ist, wobei der Festspannkörper (6) einen elastischen Greifer (7) formt, umfassend zwei Arme (71 und 72), die unter Nutzung der Festspannmittel (63), die durch die Arme (71) und (72) geformt sind, gegenseitig festgespannt werden können, sodass der Festspannkörper (6) leicht mittels einer Drehung der beiden Arme des Greifers (7) auf einer Ebene in rechten Winkeln zur Achse des zweiten Rohrs (3) in der Betriebsposition festgespannt werden kann.

2. Verbindung nach Anspruch 1, wobei die Verbindung (1) so ausgelegt ist, dass der Körper (6) in der Betriebsposition mechanisch zwischen dem Führungsrohr (4) und dem zweiten Rohr (3) befestigt ist.

3. Verbindung (1) nach Anspruch 2, wobei der Festspannkörper (6) eine Abdeckstruktur (61) umfasst, die eine Öffnung (61a) definiert, die durch den Körper (6) führt, wobei die Verbindung (1) so ausgelegt ist, dass:
- der Endabschnitt (31) in der eingefügten Position einen ersten radialen Sektor (r1) des Führungsrohrs (4) besetzt und die Dichtungseinheit (5) einen zweiten radialen Sektor (r2) des Führungsrohrs (4) besetzt;
- das zweite Rohr (3) in der Betriebsposition durch die Öffnung (61a) führt;
- die Struktur (61) in der Betriebsposition zumindest teilweise den zweiten radialen Sektor (r2) bedeckt, sodass die Trennung in Verknüpfung mit der Dichtungseinheit (5) verhindert wird.

4. Verbindung nach Anspruch 3, wobei:
- das Führungsrohr (4) den ersten Endabschnitt (41) umfasst, der in der Fixierposition proximal relativ zum ersten Rohr (2) angeordnet ist, sodass er mit dem ersten Rohr (2) in Kommunikation ist, und den zweiten Endabschnitt (42), der gegenständig zum ersten Endabschnitt (41) angeordnet ist und der in der Fixierposition distal relativ zum ersten Rohr (2) angeordnet ist, wobei der zweite Endabschnitt (42) des Führungsrohrs (4) die Schelle (421) aufweist;
- die Verbindung (1) so ausgelegt ist, dass der Körper (6) in der Betriebsposition mit der Schelle (421) im Eingriff ist, sodass er mindestens axial relativ zum Führungsrohr (4) befestigt ist;
- die Verbindung (1) so ausgelegt ist, dass die Struktur (61) in der Betriebsposition zumindest teilweise den zweiten radialen Sektor (r2) bedeckt, sodass die Trennung vom zweiten Endabschnitt (42) des Führungsrohrs (4) in Verknüpfung mit der Dichtungseinheit (5) verhindert wird.

5. Verbindung (1) nach Anspruch 4, wobei die Schelle (421) radial wegführend von der Achse (44) des Führungsrohrs (4) hervorsteht.

6. Vorrichtung (1) nach Anspruch 4 oder 5, wobei:
- der Körper (6) eine Schwächung (62) umfasst, die eine Vielzahl von Schlitzen (621, 622, 623, 624) umfasst;
- die Verbindung (1) so ausgelegt ist, dass ein jeder der Schlitze (621, 622, 623, 624) in der Betriebsposition mit einem jeweiligen Winkelsektor (4211; 4212; 4213, 4214) der Schelle (421) durch Einfügen des jeweiligen Sektors (4211; 4212; 4213; 4214) in den jeweiligen Schlitz (621; 622; 623; 624) im Eingriff ist.

7. Verbindung nach Anspruch 6, wobei:
- der Körper (6) eine Winkelausdehnung um eine relative Achse (64) und eine axiale Ausdehnung entlang der Achse (64) des Körpers (6) aufweist;
- die Schlitze (621, 622, 623, 624) winkelig rund um die Achse (64) des Körpers (6) verteilt sind.

8. Verbindung (1) nach Anspruch 7, wobei:
- die Struktur (61) eine Vielzahl von Vorständen (611, 612, 613) umfasst, die radial relativ zur Achse (64) des Körpers (6) positioniert sind und in die Öffnung (61a) hervorstehen;
- die Verbindung (1) so ausgelegt ist, dass die Vorstände (611, 612, 613) in der Betriebsposition gegen das zweite Rohr (3) von der Außenseite relativ zum zweiten Rohr (3) anschlagen, sodass sie dazu beitragen, die rotatorische Bewegung des zweiten Rohrs (3) zu führen.

9. Verbindung (1) nach Anspruch 8, wobei die Vorstände (611, 612, 613) in einem ersten Sektor (e1) der axialen Ausdehnung (e) des Körpers (6) befindlich sind und die Schlitze (621, 622, 623, 624) in einem zweiten Sektor (e2) der axialen Ausdehnung (e) befindlich sind, wobei die axialen Sektoren (e1, e2) voneinander getrennt und nacheinander entlang der axialen Ausdehnung (e) positioniert sind, sodass die Vorstände (611, 612, 613) im Betriebszustand am zweiten Rohr (3) außerhalb des Führungsrohrs (4) anschlagen.

10. Verbindung (1) nach einem der Ansprüche 4 bis 9, wobei:
- die Dichtungseinheit (5) eine Buchse (51) umfasst, die ausgelegt ist, um rund um den Endabschnitt (31) des zweiten Rohrs (3) positioniert zu werden, und ein Dichtungselement, das in einem Sitz (511) positioniert ist, der durch die Buchse (511) definiert ist;
- der erste Endabschnitt (41) des Führungsrohrs (4) eine Barriere (411) definiert, wobei die Verbindung (1) so ausgelegt ist, dass die Barriere (411) mindestens teilweise den zweiten radialen Sektor (r2) bedeckt, sodass in Verknüpfung mit der Dichtungseinheit (5) verhindert wird, dass der Endabschnitt (31) des zweiten Rohrs (3) aus dem Führungsrohr (4) aus dem ersten Endabschnitt (41) des Führungsrohrs (4) hervorsteht.

11. Verbindung (1) nach einem der vorhergehenden Ansprüche, wobei:
- die Verbindung (1) so ausgelegt ist, dass zumindest der Endabschnitt (31) des zweiten Rohrs (3) in der Einfügeposition koaxial relativ zum Führungsrohr (4) angeordnet ist;
- die Verbindung (1) so ausgelegt ist, dass der Körper (6) in der Betriebsposition koaxial zum zweiten Rohr (3) angeordnet ist.

12. Kühlkreislauf für eine Motoreinheit, umfassend:
- ein erstes Rohr (2), wobei der Kreislauf ausgelegt ist, um einen Montagezustand in der Motoreinheit einzunehmen, in dem das erste Rohr (2) hydraulisch zwischen einem Motor der Einheit und einem Kühler eingesetzt ist;
- ein zweites Rohr (3), wobei der Kreislauf so ausgelegt ist, dass das zweite Rohr (3) hydraulisch zwischen dem ersten Rohr (3) und einem Wärmetauscher eingesetzt ist;
- eine Verbindung (1) nach einem der vorhergehenden Ansprüche, wobei der Kreislauf so ausgelegt ist, dass die Verbindung (1) im Montagezustand den hydraulischen Kupplungszustand zwischen dem ersten Rohr (2) und dem zweiten Rohr (3) definiert.

13. Kühlkreislauf nach Anspruch 12, wobei der Kreislauf so ausgelegt ist, dass das Führungsrohr (4) im Montagezustand mit dem ersten Rohr (2) durch eine Seitenwand (21) des ersten Rohrs (2) in Kommunikation ist, sodass das zweite Rohr (3) einen seitlichen hydraulischen Abzweig definiert, der vom ersten Rohr (2) ausgehend von der Seitenwand (21) abzweigt.

14. Motoreinheit, umfassend einen Kühlkreislauf nach Anspruch 12 oder 13 und den Radiator, den Motor und den Wärmetauscher.

15. Verfahren zur Montage eines Kühlkreislaufs nach Anspruch 12 oder 13 in einer Motoreinheit, wobei der Kühlkreislauf ein erstes Rohr (2) und ein zweites Rohr (3) umfasst, die im Montagezustand des Kühlkreislaufs in der Einheit einen hydraulischen Kupplungszustand relativ zueinander einnehmen,
wobei das Verfahren Folgendes umfasst:
- einen Schritt zum Einfügen eines Endabschnitts (31) des zweiten Rohrs (3) in ein Führungsrohr (4);
- einen Schritt zum Festspannen eines Körpers (6) in einer Betriebsposition, in der dieser das Lösen des Endabschnitts (31) relativ zum Führungsrohr (4) zumindest auf der Seite eines Endabschnitts des Führungsrohrs (4) verhindert;
- einen Schritt zum Transportieren des zweiten Rohrs (2), des Körpers (6) und des Führungsrohrs (4), während dessen der Körper (6) die Betriebsposition einnimmt und der Endabschnitt (31) des zweiten Rohrs (3) in das Führungsrohr (4) eingefügt wird;
- einen Schritt zum Erhalten eines Zustands der hydraulischen Verbindung zwischen dem ersten Rohr (2) und einem Motor der Motoreinheit;
- einen Schritt zum Fixieren des Führungsrohrs (4) am ersten Rohr (2), sodass ein hydraulischer Kupplungszustand zwischen dem ersten Rohr (2) und dem zweiten Rohr (3) erhalten wird;
- einen Schritt zum Justieren einer axialen Positionierung und einer Winkelausrichtung des zweiten Rohrs (3), während das erste Rohr (2) und das zweite Rohr (3) den hydraulischen Kupplungszustand einnehmen, jeweils mittels einer translatorischen Bewegung des zweiten Rohrs (3) entlang seiner Achse und relativ zum ersten Rohr (2) bzw. einer rotatorischen Bewegung des zweiten Rohrs (3) um seine Achse (32) und relativ zum ersten Rohr (2);
- einen Schritt zum Erhalten eines Zustands der hydraulischen Verbindung zwischen dem zweiten Rohr (3) und einem Wärmetauscher,
wobei der Schritt zum Justieren Folgendes umfasst:
- Führen der Bewegungen mittels des Führungsrohrs (4);
- Entgegenwirken der Bewegungen durch Reibung zwischen einer Dichtungseinheit (5) und dem Führungsrohr (4), wobei die Dichtungseinheit (5) rund um den Endabschnitt (31) befindlich ist.

## Revendications

1. Joint hydraulique (1) pour un circuit de refroidissement d'un bloc moteur, ledit joint (1) étant configuré pour définir une condition de couplage hydraulique entre un premier tube (2) et un deuxième tube (3), et comprenant :
un tube de guidage (4) configuré pour adopter une position pour fixer ledit premier tube (2), ladite condition de couplage correspondant à ladite position de fixation du tube de guidage (4) et à une position d'insertion d'une partie d'extrémité (31) dudit deuxième tube (3) dans ledit tube de guidage (4) ; le tube de guidage (4) comprenant une première partie d'extrémité (41) et une deuxième partie d'extrémité (42) qui est opposée à la première partie d'extrémité (41) ; la deuxième partie d'extrémité (42) du tube de guidage (4) comportant un collier (421) ; - une unité d'étanchéité (5) interposée entre ladite partie d'extrémité (31) et ledit tube de guidage (4), dans ladite position insérée de la partie d'extrémité (31) ; - un corps (6) pour verrouiller le deuxième tube (3) au premier tube (2) ;
dans lequel le tube de guidage (4) est configuré pour permettre le réglage, dans la condition de couplage, d'un positionnement ou d'un mouvement axial et d'une orientation ou d'un mouvement angulaire du deuxième tube (3), au moyen d'un mouvement de translation dudit deuxième tube (3) le long de son axe (32) et par rapport audit premier tube (2), et au moyen d'un mouvement de rotation dudit deuxième tube (3) autour de son axe (32) et par rapport audit premier tube (2), respectivement ;
et dans lequel le corps de verrouillage (6) est positionné entre le deuxième tube (3) et le tube de guidage (4), au moyen d'un mouvement de verrouillage, dans une position de fonctionnement dans laquelle le corps de verrouillage (6) empêche le désengagement de la partie d'extrémité (31) dudit tube de guidage (4) ; ledit corps de verrouillage (6) étant configuré pour permettre, à la partie d'extrémité (31) du deuxième tube (3), la possibilité de positionnement ou de mouvement axial et une orientation ou un mouvement angulaire du deuxième tube (3) dans ladite position de fonctionnement de verrouillage,
**caractérisé en ce que** le corps de verrouillage (6) définit des moyens de verrouillage à encliquetage (63) et peut être verrouillé par encliquetage dans ladite position de fonctionnement à l'aide desdits moyens de verrouillage (63) ; lorsque le corps de verrouillage (6) adopte la position de fonctionnement, le corps de verrouillage (6) est mis en prise avec le collier (421) de manière à être solidaire au moins axialement par rapport audit tube de guidage (4) ; le corps de verrouillage (6) formant un préhenseur élastique (7) comprenant deux bras (71 et 72) qui peuvent être mutuellement verrouillés à l'aide des moyens de verrouillage (63) étant formés par les bras (71) et (72) ; de cette manière, le corps de verrouillage (6) peut être facilement verrouillé dans la position de fonctionnement au moyen d'une rotation des deux bras du préhenseur (7) sur un plan perpendiculaire à l'axe du deuxième tube (3).

2. Joint selon la revendication 1, dans lequel ledit joint (1) est configuré de sorte que, dans ladite position de fonctionnement, ledit corps (6) est mécaniquement solidaire entre ledit tube de guidage (4) et ledit deuxième tube (3).

3. Joint (1) selon la revendication 2, dans lequel ledit corps de verrouillage (6) comprend une structure de recouvrement (61) qui définit une ouverture (61a) traversant ledit corps (6), ledit joint (1) étant configuré de sorte que :
- dans ladite position insérée, ladite partie d'extrémité (31) occupe un premier secteur radial (r1) dudit tube de guidage (4) et ladite unité d'étanchéité (5) occupe un deuxième secteur radial (r2) dudit tube de guidage (4) ;
- dans ladite position de fonctionnement, ledit deuxième tube (3) traverse ladite ouverture (61a) ;
- dans ladite position de fonctionnement, ladite structure (61) recouvre au moins partiellement ledit deuxième secteur radial (r2) de manière à empêcher, conjointement à ladite unité d'étanchéité (5), ledit décrochage.

4. Joint selon la revendication 3, dans lequel :
- ledit tube de guidage (4) comprend la première partie d'extrémité (41) qui, dans ladite position de fixation, est proximale par rapport audit premier tube (2) de manière à être en communication avec ledit premier tube (2), et la deuxième partie d'extrémité (42), qui est opposée à ladite première partie d'extrémité (41) et qui, dans ladite position de fixation, est distale par rapport audit premier tube (2), ladite deuxième partie d'extrémité (42) du tube de guidage (4) comportant le collier (421) ;
- ledit joint (1) est configuré de sorte que, dans ladite position de fonctionnement, ledit corps (6) est mis en prise avec ledit collier (421) de manière à être solidaire au moins axialement par rapport audit tube de guidage (4) ;
- ledit joint (1) est configuré de sorte que, dans ladite position de fonctionnement, ladite structure (61) recouvre au moins partiellement ledit deuxième secteur radial (r2) de manière à empêcher, conjointement à ladite unité d'étanchéité (5), ledit décrochage de ladite deuxième partie d'extrémité (42) du tube de guidage (4).

5. Joint (1) selon la revendication 4, dans lequel ledit collier (421) dépasse radialement en s'éloignant de l'axe (44) du tube de guidage (4).

6. Joint (1) selon la revendication 4 ou 5, dans lequel :
- ledit corps (6) comprend une faiblesse (62) qui comprend une pluralité de fentes (621, 622, 623, 624) ;
- ledit joint (1) est configuré de sorte que, dans ladite position de fonctionnement, chacune desdites fentes (621, 622, 623, 624) est mise en prise avec un secteur angulaire respectif (4211 ; 4212 ; 4213, 4214) dudit collier (421) en insérant ledit secteur respectif (4211 ; 4212 ; 4213 ; 4214) dans la fente respective (621 ; 622 ; 623 ; 624).

7. Joint selon la revendication 6, dans lequel :
- ledit corps (6) possède une extension angulaire autour d'un axe relatif (64) et une extension axiale le long dudit axe (64) du corps (6) ;
- lesdites fentes (621, 622, 623, 624) sont réparties angulairement autour de l'axe (64) du corps (6).

8. Joint (1) selon la revendication 7, dans lequel :
- ladite structure (61) comprend une pluralité de saillies (611, 612, 613) positionnées radialement par rapport audit axe (64) du corps (6) et dépassant dans ladite ouverture (61a) ;
- ledit joint (1) est configuré de sorte que, dans ladite position de fonctionnement, lesdites saillies (611, 612, 613) viennent se mettre en butée contre ledit deuxième tube (3) à partir de l'extérieur par rapport audit deuxième tube (3), de manière à contribuer au guidage dudit mouvement de rotation du deuxième tube (3).

9. Joint (1) selon la revendication 8, dans lequel lesdites saillies (611, 612, 613) sont situées dans un premier secteur (e1) de l'extension axiale (e) du corps (6) et lesdites fentes (621, 622, 623, 624) sont situées dans un deuxième secteur (e2) de ladite extension axiale (e), lesdits secteurs axiaux (e1, e2) étant séparés l'un de l'autre et positionnés l'un après l'autre le long de ladite extension axiale (e), de telle sorte que, dans l'état de fonctionnement, lesdites saillies (611, 612, 613) se mettent en butée sur le deuxième tuyau (3) à l'extérieur du tuyau de guidage (4).

10. Joint (1) selon l'une quelconque des revendications 4 à 9, dans lequel :
- ladite unité d'étanchéité (5) comprend une douille (51) configurée pour être positionnée autour de ladite partie d'extrémité (31) du deuxième tube (3) et un élément d'étanchéité positionné dans un siège (511) défini par la douille (511) ;
- ladite première partie d'extrémité (41) du tube de guidage (4) définit une barrière (411), ledit joint (1) étant configuré de sorte que ladite barrière (411) recouvre au moins partiellement ledit deuxième secteur radial (r2) de manière à empêcher, conjointement à ladite unité d'étanchéité (5), ladite partie d'extrémité (31) du deuxième tube (3) de dépasser dudit tube de guidage (4) à partir de ladite première partie d'extrémité (41) du tube de guidage (4).

11. Joint (1) selon l'une quelconque des revendications précédentes, dans lequel :
- ledit joint (1) est configuré de sorte que, dans ladite position insérée, au moins ladite partie d'extrémité (31) dudit deuxième tube (3) est coaxiale par rapport audit tube de guidage (4) ;
- ledit joint (1) est configuré de sorte que, dans ladite position de fonctionnement, ledit corps (6) est coaxial audit deuxième tube (3).

12. Circuit de refroidissement pour un bloc moteur, comprenant :
- un premier tube (2), ledit circuit étant configuré pour adopter une condition d'assemblage dans le bloc moteur dans laquelle ledit premier tube (2) est interposé de façon hydraulique entre un moteur du bloc et un radiateur ;
- un deuxième tube (3), ledit circuit étant configuré de sorte que, dans ladite condition d'assemblage, ledit deuxième tube (3) est interposé de façon hydraulique entre ledit premier tube (3) et un échangeur de chaleur ;
- un joint (1) selon l'une quelconque des revendications précédentes, ledit circuit étant configuré de sorte que, dans ladite condition d'assemblage, le joint (1) définit la condition de couplage hydraulique entre le premier tube (2) et le deuxième tube (3).

13. Circuit de refroidissement selon la revendication 12, dans lequel le circuit est configuré de sorte que, dans ladite condition d'assemblage, le tube de guidage (4) est en communication avec le premier tube (2) à travers une paroi latérale (21) du premier tube (2), de telle sorte que ledit deuxième tube (3) définit une branche hydraulique latérale qui se divise à partir dudit premier tube (2) en partant de ladite paroi latérale (21) .

14. Bloc moteur, comprenant un circuit de refroidissement selon la revendication 12 ou 13 et ledit radiateur, moteur et échangeur de chaleur.

15. Procédé d'assemblage d'un circuit de refroidissement selon la revendication 12 ou 13 dans un bloc moteur, ledit circuit de refroidissement comprenant un premier tube (2) et un deuxième tube (3) qui, dans la condition d'assemblage du circuit de refroidissement dans le groupe, adoptent une condition de couplage hydraulique l'un par rapport à l'autre ;
dans lequel le procédé comprend :
- une étape d'insertion d'une partie d'extrémité (31) dudit deuxième tube (3) dans un tube de guidage (4) ;
- une étape de verrouillage d'un corps (6) dans une position de fonctionnement dans laquelle il empêche le désengagement de ladite partie d'extrémité (31) par rapport audit tube de guidage (4) au moins du côté d'une partie d'extrémité du tube de guidage (4) ;
- une étape consistant à transporter le deuxième tube (2), le corps (6) et le tube de guidage (4), au cours de laquelle le corps (6) adopte la position de fonctionnement et la partie d'extrémité (31) du deuxième tube (3) est insérée dans ledit tube de guidage (4) ;
- une étape consistant à obtenir une condition de raccordement hydraulique entre ledit premier tube (2) et un moteur dudit bloc moteur ;
- une étape de fixation dudit tube de guidage (4) audit premier tube (2), de manière à obtenir une condition de couplage hydraulique entre lesdits premier tube (2) et deuxième tube (3) ;
- une étape de réglage d'un positionnement axial et d'une orientation angulaire dudit deuxième tube (3), alors que ledit premier tube (2) et ledit deuxième tube (3) adoptent ladite condition de couplage hydraulique, au moyen d'un mouvement de translation dudit deuxième tube (3) le long de son axe et par rapport audit premier tube (2), et d'un mouvement de rotation dudit deuxième tube (3) autour de son axe (32) et par rapport audit premier tube (2), respectivement ;
- une étape consistant à obtenir une condition de raccordement hydraulique entre ledit deuxième tube (3) et un échangeur de chaleur ;
dans lequel l'étape de réglage comprend :
- guider lesdits mouvements au moyen dudit tube de guidage (4) ;
- opposer lesdits mouvements par friction entre une unité d'étanchéité (5) et ledit tube de guidage (4), ladite unité d'étanchéité (5) étant située autour de ladite partie d'extrémité (31).
